# EUROPÄISCHE PATENTANMELDUNG

(11) **EP 4 782 235 A1**
(43) Veröffentlichungstag der Anmeldung: **29.07.2026**
(21) Anmeldenummer: 26151719.7
(22) Anmeldetag: 14.01.2026
(51) Int. Cl.: B60H 1/00, B60H 1/22

(54) **MOBILES TROCKNERSYSTEM FÜR EIN FAHRZEUG, INSBESONDERE CAMPINGFAHRZEUG, NUTZFAHRZEUG ODER DERGLEICHEN**

(30) Priorität: 22.01.2025 DE 102025102203
(71) Anmelder: Eberspächer Climate Control Systems GmbH, 73730 Esslingen (DE)
(72) Erfinder: Keefer, Jörg, Weinstadt (DE)
(74) Vertreter: Ruttensperger Lachnit Trossin Gomoll

(57) **Zusammenfassung**

Ein mobiles Trocknersystem für ein Fahrzeug, insbesondere Campingfahrzeug, Nutzfahrzeug oder dergleichen, umfasst einen Trockner (32) mit einer in einem Trocknergehäuse (12) gebildeten Trocknerkammer (14), wobei an dem Trocknergehäuse (12) wenigstens eine Trocknerluft-Einleitöffnung (26) zum Einleiten von Trocknerluft in die Trocknerkammer (14) und wenigstens eine Trocknerluft-Ableitöffnung (34) zum Ableiten von Trocknerluft aus der Trocknerkammer (14) vorgesehen sind, eine Fahrzeugheizeinheit (16) zum Erwärmen von Luft, wobei wenigstens ein Teil der von der Fahrzeugheizeinheit (16) erwärmten Luft der Trocknerkammer (14) als Trocknerluft zuführbar ist.

## Beschreibung

Die vorliegende Erfindung betrifft ein mobiles Trocknersystem für ein Fahrzeug, wie zum Beispiel Campingfahrzeug, Nutzfahrzeug oder dergleichen.

Insbesondere dann, wenn Campingfahrzeuge, wie zum Beispiel Wohnmobile oder Wohnwagen, über eine längere Zeit hinweg genutzt werden, besteht für die derartige Fahrzeuge nutzenden Personen die Notwendigkeit, Kleidung zu waschen und die gewaschene Kleidung zu trocknen. Auch für Fernfahrer oder Benutzer von Baustellenfahrzeugen bzw. Forst und landwirtschaftlichen Fahrzeugen, also allgemein bei Nutzfahrzeugen oder auch polizeilich genutzten Fahrzeugen, kann die Notwendigkeit bestehen, nasse bzw. feuchte Arbeitskleidung zu trocknen. Auch bei Wasserfahrzeugen, wie zum Beispiel Motor- oder Segelyachten, kann eine Notwendigkeit zum Trocknen Wasser bzw. feuchter Kleidung bestehen.

Zum Trocknen nasser bzw. feuchter Kleidung können bei Benutzung derartiger Fahrzeuge, wie zum Beispiel Campingfahrzeugen oder Fernlastkraftwagen, im Allgemeinen Wäscheleinen oder Wäscheständer verwendet werden, an welchen die nasse Kleidung aufgehängt und beispielsweise durch Sonneneinstrahlung getrocknet werden kann. Insbesondere bei vergleichsweise niedrigen Außentemperaturen oder bei Regenwetter sind derartige Möglichkeiten zum Trocknen nasser Kleidung nicht oder nur bedingt verwendbar.

Es ist die Aufgabe der vorliegenden Erfindung, ein mobiles Trocknersystem für ein Fahrzeug, insbesondere Campingfahrzeug, Nutzfahrzeug oder dergleichen, bereitzustellen, welches im Wesentlichen unabhängig von Umgebungsbedingungen einsetzbar ist.

Erfindungsgemäß wird diese Aufgabe gelöst durch ein mobiles Trocknersystem für ein Fahrzeug, insbesondere Campingfahrzeug, Nutzfahrzeug oder dergleichen, umfassend:
- einen Trockner mit einer in einem Trocknergehäuse gebildeten Trocknerkammer, wobei an dem Trocknergehäuse wenigstens eine Trocknerluft-Einleitöffnung zum Einleiten von Trocknerluft in die Trocknerkammer und wenigstens eine Trocknerluft-Ableitöffnung zum Ableiten von Trocknerluft aus der Trocknerkammer vorgesehen sind,
- eine Fahrzeugheizeinheit zum Erwärmen von Luft,
wobei wenigstens ein Teil der von der Fahrzeugheizeinheit erwärmten Luft der Trocknerkammer als Trocknerluft zuführbar ist.

Derartige Fahrzeuge, wie zum Beispiel Campingfahrzeuge bzw. Nutzfahrzeuge, Schiffe oder dergleichen, verfügen im Allgemeinen über ein unabhängig von einem Antriebsaggregat, z.B. Brennkraftmaschine, betreibbares und daher Wärme bereitstellende Fahrzeugheizeinheit. Die vorliegende Erfindung nutzt eine derartige in einem Fahrzeug vorhandene Fahrzeugheizeinheit, um durch diese erwärmte Luft als Trocknerluft zum Trocknen von in der Trocknerkammer positionierter, feuchter Kleidung oder dergleichen einsetzen zu können. Damit wird das Trocknersystem im Wesentlichen unabhängig davon, welche Witterungsbedingungen in der Umgebung eines Fahrzeugs vorherrschen oder ob in der Umgebung eines Fahrzeugs die Möglichkeit besteht, beispielsweise eine Wäscheleine aufzuspannen oder einen Wäscheständer aufzustellen.

Für einen vom Fahrbetrieb eines Fahrzeugs und damit dessen Antriebsaggregat im Wesentlichen unabhängigen Betrieb des Trocknersystems kann die Fahrzeugheizeinheit ein elektrisch betriebenes Fahrzeugheizgerät oder/und ein brennstoffbetriebenes Fahrzeugheizgerät umfassen.

Das Fahrzeugheizgerät kann zur Erwärmung von Luft, also als sogenanntes Luftheizgerät, ausgebildet sein, und wenigstens ein Teil der von dem Fahrzeugheizgerät erwärmten Luft, im Allgemeinen Frischluft oder aus einem Fahrzeuginnenraum eines Fahrzeugs abgezogene Umluft, kann der Trocknerkammer als Trocknerluft zuführbar sein.

Um das zum Bereitstellen der Trocknerluft betreibbare Fahrzeugheizgerät auch zum Erwärmen eines Fahrzeuginnenraums nutzen zu können, kann wenigstens ein Teil der von dem Fahrzeugheizgerät erwärmten Luft einem zu erwärmenden Fahrzeuginnenraum als Heizluft zuführbar sein.

Um die durch das Fahrzeugheizgerät erwärmte Luft sowohl als Trocknerluft, als auch als Heizluft nutzen zu können, wird vorgeschlagen, dass ein Strömungsteiler vorgesehen ist, wobei der Strömungsteiler dazu ausgebildet ist, wahlweise die oder einen Teil der von dem Fahrzeugheizgerät erwärmten Luft der Trocknerkammer als Trocknerluft zuzuführen oder die oder einen Teil der von dem Fahrzeugheizgerät erwärmten Luft dem zu erwärmenden Fahrzeuginnenraum als Heizluft zuzuführen.

Bei einer alternativen Ausgestaltungsform kann das Fahrzeugheizgerät zur Erwärmung einer Flüssigkeit, also als sogenanntes Wasserheizgerät, ausgebildet sein, und die Fahrzeugheizeinheit kann wenigstens einen Wärmetauscher zur Übertragung von Wärme von der Flüssigkeit auf der Trocknerkammer als Trocknerluft zuzuführende Luft umfassen.

Um auch bei derartiger Ausgestaltung des Fahrzeugheizgeräts einen Fahrzeuginnenraum erwärmen zu können, kann die Fahrzeugheizeinheit wenigstens einen Wärmetauscher zur Übertragung von Wärme von der Flüssigkeit auf einem zu erwärmenden Fahrzeuginnenraum als Heizluft zuzuführende Luft umfassen.

Die Flüssigkeit kann in einem Kühlmittelkreislauf einer Brennkraftmaschine enthaltene Kühlflüssigkeit sein. Dies bietet den Vorteil, dass einerseits das Fahrzeugheizgerät auch zur thermischen Konditionierung einer derartigen Brennkraftmaschine genutzt werden kann. Andererseits kann bei in Betrieb gesetzter Brennkraftmaschine und durch diese erwärmter Kühlflüssigkeit die zum Bereitstellen der Trocknerluft erforderliche Wärmeenergie allein oder zumindest teilweise aus der Abwärme der Brennkraftmaschine bereitgestellt werden.

Um die Trocknerluft in die Trocknerkammer leiten zu können, kann wenigstens ein Gebläse zum Fördern der Trocknerluft in die Trocknerkammer vorgesehen sein. Bei Ausgestaltung des Fahrzeugheizgeräts als Luftheizgerät kann dieses Gebläse das dem Fahrzeugheizgerät zugeordnete Heizluftgebläse umfassen. Bei Ausgestaltung des Fahrzeugheizgeräts als Wasserheizgerät kann dieses Gebläse ein dem zum Erwärmen von Luft zum Bereitstellen der Trocknerluft eingesetzten Wärmetauscher zugeordnetes und Luft durch diesen hindurch förderndes Gebläse sein.

Um die Effizienz des Trocknersystems zu steigern, kann ein Abluft-Wärmetauscher vorgesehen sein, wobei der Abluft-Wärmetauscher dazu ausgebildet ist, Wärme von der aus der Trocknerkammer abgeleiteten Trocknerluft auf der Trocknerkammer als Trocknerluft zuzuführende Luft oder/und dem zu erwärmenden Fahrzeuginnenraum als Heizluft zuzuführende Luft zu übertragen.

Zum Einleiten derartig erwärmter Luft als Teil der Trocknerluft in die Trocknerkammer kann ein erster Luftmischer vorgesehen sein, wobei der erste Luftmischer dazu ausgebildet ist, vermittels des Abluft-Wärmetauschers erwärmte Luft und vermittels der Fahrzeugheizeinheit erwärmte Luft zu mischen und der Trocknerkammer als Trocknerluft zuzuführen.

Weiter kann ein zweiter Luftmischer vorgesehen sein, wobei der zweite Luftmischer dazu ausgebildet ist, vermittels der Fahrzeugheizeinheit erwärmte Luft mit im Wesentlichen nicht erwärmter Luft, also beispielsweise Frischluft, zu mischen und der Trocknerkammer als Trocknerluft zuzuführen.

Für einen energieeffizienten Betrieb kann der zweite Luftmischer als Saugpumpe ausgebildet sein zum Ansaugen der im Wesentlichen nicht erwärmten Luft vermittels der vermittels der Fahrzeugheizeinheit erwärmten Luft. Alternativ oder zusätzlich kann ein Gebläse zum Fördern der im Wesentlichen nicht erwärmten Luft in den zweiten Luftmischer vorgesehen sein.

Die Effizienz des Trocknersystems kann weiter gesteigert werden, wenn ein erster Luftentfeuchter zum Entfeuchten wenigstens eines Teils der der Trocknerkammer als Trocknerluft zuzuführenden Luft vorgesehen ist. Insbesondere dann, wenn die oder ein Teil der aus der Trocknerkammer abgeleiteten Luft in einen Fahrzeuginnenraum eingeleitet wird, ist es vorteilhaft, wenn ein zweiter Luftentfeuchter zum Entfeuchten wenigstens eines Teils der aus der Trocknerkammer abgeleiteten Trocknerluft vorgesehen ist, oder/und wenn ein Partikelfilter zum Ausfiltern von in der aus der Trocknerkammer abgeleiteten Trocknerluft enthaltenen Partikeln vorgesehen ist.

Zur Anpassung der in dem Trocknersystem aufzuwendenden Energie an den Zustand beispielsweise der zu trocknenden Gegenstände kann eine Menge oder/und eine Temperatur der der Trocknerkammer zuzuführenden Trocknerluft in Abhängigkeit von wenigstens einem Betriebsparameter der Trocknerkammer, vorzugsweise einer Temperatur oder/und einer Luftfeuchtigkeit in der Trocknerkammer, einstellbar sein.

Zum Ansteuern der Fahrzeugheizeinheit kann eine erste Ansteuereinheit vorgesehen sein.

Weiter kann eine zweite Ansteuereinheit zum Ansteuern wenigstens eines Systembereichs zum Einstellen der Menge oder/und der Temperatur der der Trocknerkammer zuzuführenden Trocknerluft vorgesehen sein.

Wenn die erste Ansteuereinheit die zweite Ansteuereinheit bereitstellt, kann in einfacher Weise eine ansteuerungstechnische Verknüpfung der Fahrzeugheizeinheit mit den Betriebsbedingungen in der Trocknerkammer bereitgestellt werden. Somit wird es beispielsweise auch möglich, die Heizleistung des Fahrzeugheizgeräts der Fahrzeugheizeinheit in Abhängigkeit von dem Betriebszustand der Trocknerkammer einzustellen. Bei einer alternativen, baulich einfach zu realisierenden Ausgestaltung können die erste Ansteuereinheit und die zweite Ansteuereinheit als separate Ansteuereinheiten ausgebildet sein. Dies ermöglicht es, das Trocknersystem ohne wesentlichen baulichen Aufwand nachträglich in ein Fahrzeug zu integrieren.

Um einer Bedienperson den Zustand des Trocknersystems bzw. von darin zu trocknenden Gegenständen anzeigen zu können, kann eine Anzeigeeinheit zum Anzeigen wenigstens eines Betriebsparameters der Trocknerkammer, vorzugsweise einer Temperatur oder/und einer Luftfeuchtigkeit in der Trocknerkammer, vorgesehen sein.

Für eine stabile, gleichwohl leicht in ein Fahrzeug zu integrierende Bauart kann das Trocknergehäuse wenigstens teilweise als im Wesentlichen starres Trocknergehäuse ausgebildet sein, oder/und kann das Trocknergehäuse wenigstens teilweise als flexibles Trocknergehäuse, vorzugsweise balgenartig oder hüllenartig, ausgebildet sein.

Die Erfindung betrifft ferner ein Fahrzeug, insbesondere Campingfahrzeug, Nutzfahrzeug oder dergleichen, umfassend ein Trocknersystem mit erfindungsgemäßem Aufbau.

Das Trocknergehäuse kann in einen Fahrzeuginnenraum des Fahrzeugs fest installiert sein, was insbesondere bei größer dimensionierten Fahrzeugen bzw. Fahrzeuginnenräumen möglich ist, oder kann, wenn dies aus Platzgründen oder aus baulichen Gründen nicht möglich oder zulässig ist, außerhalb des Fahrzeuginnenraums positioniert oder positionierbar sein, wobei die Trocknerluft-Einleitöffnung vermittels einer Trocknerluft-Zuführleitung mit dem Fahrzeug verbunden oder verbindbar ist.

Die vorliegende Erfindung wird nachfolgend mit Bezug auf die beiliegenden Figuren detailliert beschrieben. Es zeigt:
- Fig. 1: in prinzipartiger Darstellung ein Trocknersystem für ein Fahrzeug;
- Fig. 2: eine der Fig. 1 entsprechende Ansicht einer alternativen Ausgestaltungsform eines Trocknersystems für ein Fahrzeug;
- Fig. 3: eine der Fig. 1 entsprechende Ansicht einer alternativen Ausgestaltungsform eines Trocknersystems für ein Fahrzeug;
- Fig. 4: eine der Fig. 1 entsprechende Ansicht einer alternativen Ausgestaltungsform eines Trocknersystems für ein Fahrzeug;
- Fig. 5: eine der Fig. 1 entsprechende Ansicht einer alternativen Ausgestaltungsform eines Trocknersystems für ein Fahrzeug;
- Fig. 6: eine der Fig. 1 entsprechende Ansicht einer alternativen Ausgestaltungsform eines Trocknersystems für ein Fahrzeug;
- Fig. 7: eine der Fig. 1 entsprechende Ansicht einer alternativen Ausgestaltungsform eines Trocknersystems für ein Fahrzeug;
- Fig. 8: eine der Fig. 1 entsprechende Ansicht einer alternativen Ausgestaltungsform eines Trocknersystems für ein Fahrzeug;
- Fig. 9: eine Abwandlung eines Trocknersystems mit einem Luftmischer zum Beimischen von Umgebungsluft;
- Fig. 10: eine der Fig. 9 entsprechende Ansicht einer alternativen Ausgestaltung dieser Abwandlung;
- Fig. 11: eine der Fig. 9 entsprechende Ansicht einer alternativen Ausgestaltung dieser Abwandlung;
- Fig. 12: eine prinzipielle Darstellung eines Trocknergehäuses mit darin erkennbaren Strukturelementen;
- Fig. 13: in ihren Darstellungen a) und b) ein teilweise starr und teilweise flexibel ausgebildetes Trocknergehäuse im ausgebreiteten und zusammengefalteten Zustand;
- Fig. 14: ein flexibles, hüllenartiges Trocknergehäuse;
- Fig. 15: eine alternative Ausgestaltungsart eines flexiblen, hüllenartigen Trocknergehäuses;
- Fig. 16: ein mit einem Trocknersystem ausgestattetes Fahrzeug.

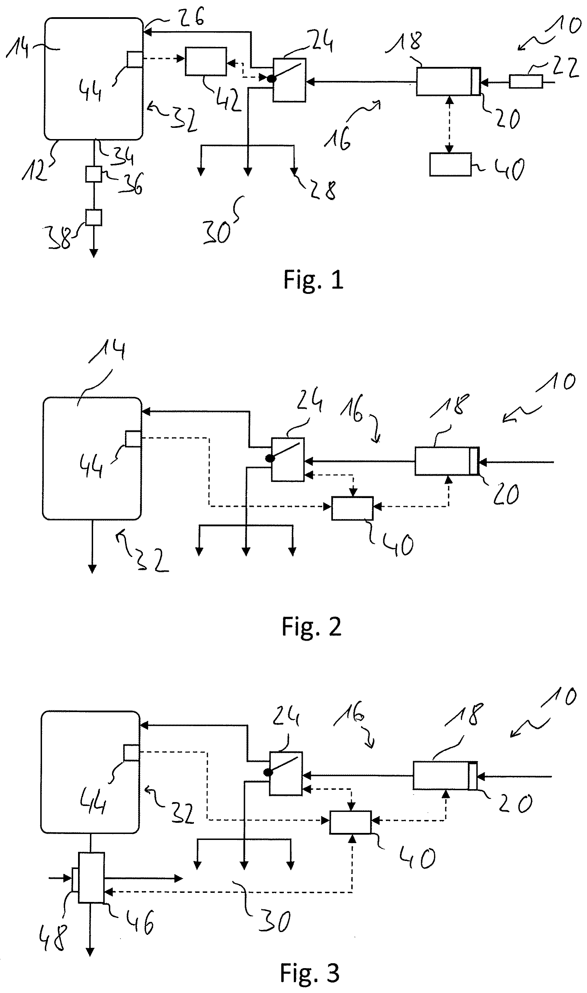

In Fig. 1 ist ein Trocknersystem für ein Fahrzeug allgemein mit 10 bezeichnet. Das Trocknersystem 10 umfasst eine in einem Trocknergehäuse 12 ausgebildete Trocknerkammer 14. In der Trocknerkammer 14 können nasse bzw. feuchte Gegenstände positioniert werden und durch in nachfolgend beschriebener Art und Weise in die Trocknerkammer 14 eingeleitete Trocknerluft getrocknet werden.

Das Trocknersystem 10 umfasst eine Heizeinheit 16, vermittels welcher in die Trocknerkammer 14 als Trocknerluft einzuleitende Luft erwärmt werden kann. Die Heizeinheit 14 umfasst ein als Luftheizgerät ausgebildetes Fahrzeugheizgerät 18. Das Fahrzeugheizgerät 18 kann beispielsweise brennstoffbetrieben sein und durch Verbrennung eines Gemisches aus Brennstoff und Verbrennungsluft Wärme bereitstellen, die auf die zu erwärmende Luft übertragen wird. Das Fahrzeugheizgerät 18 umfasst ein Gebläse 20, durch welches die zu erwärmende Luft beispielsweise aus der Umgebung eines Fahrzeugs oder auch aus einem Fahrzeuginnenraum 30 in das Fahrzeugheizgerät 18 und dann weiter zu den mit erwärmter Luft zu speisenden Systembereichen gefördert wird. Die aus der Umgebung oder dem Fahrzeuginnenraum 30 in das Fahrzeugheizgerät 18 geförderte Luft kann beispielsweise vor Eintritt in das Fahrzeugheizgerät 18 durch einen beispielsweise als Kondensator oder dergleichen ausgebildeten Luftentfeuchter 22 geleitet werden, um der zu erwärmenden und insbesondere auch in der Trocknerkammer 14 zum Trocknen von Gegenständen zu nutzenden Luft Feuchtigkeit zu entziehen. Beispielsweise kann der Luftentfeuchter 22 durch thermische Wechselwirkung mit einem Kühlmedium, beispielsweise in einem Klimatisierungssystem gekühlter Luft, umströmt werden, um das Auskondensieren von Wasser zu unterstützen.

Stromabwärts des Fahrzeugheizgeräts 18 ist ein Strömungsteiler 24 angeordnet, welcher die von dem Fahrzeugheizgerät 18 erwärmt abgegebene Luft wahlweise entweder zu einer Trocknerluft-Einleitöffnung 26 des Trocknergehäuses 12 oder zu einer oder mehreren Heizluftabgabestellen 28 leitet, über welche die erwärmte Luft als Heizluft in den Fahrzeuginnenraum 30 abgegeben werden kann.

Der Strömungsteiler 24 kann dazu ausgebildet sein, beispielsweise durch manuelle Interaktion den Anteil der als Trocknerluft der Trocknerkammer 14 zuzuführenden erwärmten Luft und den Anteil der als Heizluft dem Fahrzeuginnenraum 30 zuzuführenden erwärmten Luft einzustellen. Ist beispielsweise ein Betrieb des im Wesentlichen das Trocknergehäuse 12 und die darin ausgebildete Trocknerkammer 14 umfassenden Trockners 32 nicht erforderlich, kann der Strömungsteiler 24 so eingestellt werden, dass beispielsweise die gesamte vom Fahrzeugheizgerät 18 erwärmte Luft in den Fahrzeuginnenraum 30 eingeleitet wird.

Die in die Trocknerkammer 14 eingeleitete Trocknerluft umströmt die darin angeordneten, zu trocknenden Gegenstände und verlässt den Trockner 32 bzw. das Trocknergehäuse 12 an einer Trocknerluft-Ableitöffnung 34. Die mit Wasser bzw. Wasserdampf angereicherte, den Trockner 32 verlassende Trocknerluft kann beispielsweise zur Umgebung abgegeben werden. Alternativ besteht die Möglichkeit, diese als Heizluft in den Fahrzeuginnenraum 30 einzuleiten. Um dabei das Entstehen einer zu hohen Luftfeuchtigkeit im Fahrzeuginnenraum 30 vermeiden, kann die vom Trockner 32 abgegebene Trocknerluft durch einen weiteren beispielsweise als Kondensator ausgebildeten Luftentfeuchter 36 geleitet werden. Da beim Trocknen von Kleidung die den Trockner 32 verlassende trockene Luft auch feinste Staub- bzw. Textilpartikel enthalten kann, kann die Trocknerluft vor dem Einleiten in den Fahrzeuginnenraum 30 durch einen Partikelfilter 38 hindurchgeleitet werden.

Bei dem in Fig. 1 dargestellten Trocknersystem 10 sind die Fahrzeugheizeinheit bzw. das Fahrzeugheizgerät 18 einerseits und der Trockner 32 andererseits ansteuerungstechnisch grundsätzlich voneinander entkoppelt. Dem Fahrzeugheizgerät 18 ist eine erste Ansteuereinheit 40 zugeordnet, welche dessen Betrieb beispielsweise auf Grundlage verschiedener Parameter, wie z. B. der Umgebungstemperatur, der Innenraumtemperatur oder dergleichen, steuert bzw. regelt. Hier können beispielsweise auch von einer Bedienperson Vorgaben, wie z. B. eine Solltemperatur für den Fahrzeuginnenraum 30 oder ein beabsichtigter Betrieb des Trockners 32 und eine daraus resultierende höhere Heizleistung berücksichtigt werden.

In Zuordnung zu dem Trockner 32 bzw. dem Strömungsteiler 24 ist eine zweite Ansteuereinheit 42 vorgesehen. Dieser kann beispielsweise den Betriebszustand der Trocknerkammer 14 repräsentierende Information von einer Sensoranordnung 44 zugeführt werden. Diese Information kann beispielsweise Information über die in der Trocknerkammer 14 vorherrschende Temperatur oder/und Luftfeuchtigkeit umfassen. Unter Berücksichtigung dieser Information kann die zweite Ansteuereinheit 42 den Strömungsteiler 24 ansteuern, so dass dieser die Menge der der Trocknerkammer 14 als Trocknerluft zuzuführenden, erwärmten Luft entsprechend dem Bedarf einstellen kann. Für diese Einstellung können beispielsweise vermittels einer Bedienperson über die zweite Ansteuereinheit 42 weitere Informationen, wie z. B. die Menge der zu trocknenden Gegenstände und deren Beschaffenheit und Feuchtigkeitsgrad eingegeben werden, so dass auch derartige Informationen bei der Einstellung der Menge der der Trocknerkammer 14 zuzuführenden Trocknerluft eingestellt werden kann.

Eine Abwandlung des Trocknersystems 10 ist in Fig. 2 dargestellt. Dieses entspricht hinsichtlich seines grundsätzlichen Aufbaus der in Fig. 1 dargestellten Ausgestaltung. Es ist zu betonen, dass selbstverständlich auch in Verbindung mit dem in Fig. 2 dargestellten Trocknersystem 10 und auch den nachfolgend dargestellten bzw. noch beschriebenen Trocknersystemen 10 derartige Systemkomponenten, wie z. B. die beiden Luftentfeuchter 22, 36 und der Partikelfilter 38 einzeln oder in beliebiger Kombination vorgesehen sein können.

Bei dem in Fig. 2 dargestellten Trocknersystem 10 sind das Fahrzeugheizgerät 18 und der Trockner 32 bzw. der Strömungsteiler 24 ansteuerungstechnisch miteinander verknüpft. Die erste Ansteuereinheit 40 stellt auch die zweite Ansteuereinheit bereit und ist somit sowohl mit dem Fahrzeugheizgerät 18, als auch dem Strömungsteiler 42 zur Ansteuerung verknüpft. Die von der Sensoranordnung 44 generierten und den Betriebszustand der Trocknerkammer 14 repräsentierenden Signale werden der ersten Ansteuereinheit 40 zugeführt, so dass unter Berücksichtigung dieser den Betriebszustand der Trocknerkammer 14 repräsentierenden Information sowohl der Strömungsteiler 24 zur entsprechenden Regulierung der der Trocknerkammer 14 zuzuführenden Trocknerluft, als auch das Fahrzeugheizgerät 18 zum Bereitstellen einer geeigneten Heizleistung angesteuert werden können.

Während das in Fig. 1 dargestellte Trocknersystem 10 mit auch ansteuerungstechnisch voneinander entkoppeltem Fahrzeugheizgerät 18 einerseits und Trockner 32 andererseits besonders geeignet ist für Nachrüstsysteme, ist das in Fig. 2 dargestellte Trocknersystem 10, bei welchem auch eine ansteuerungstechnische Verknüpfung dieser Systembereiche realisiert ist, besonders geeignet, wenn ein Fahrzeug, wie z. B. ein Campingfahrzeug, bereits in der Erstausstattung mit einem derartigen Trocknersystem 10 ausgestattet wird. Ein Vorteil einer derartigen ansteuerungstechnischen Verknüpfung ist vor allem auch, dass die verschiedenen aufeinander abgestimmt zu betreibenden Systembereiche so betrieben werden können, dass ein optimaler Einsatz der zum Erwärmen des Fahrzeuginnenraums 30 einerseits und zum Trocknen von Gegenständen andererseits aufgewandten Energie erreicht wird.

Eine weitere Abwandlung des Trocknersystems 10 ist in Fig. 3 dargestellt. Bei diesem Trocknersystem 10 ist dem Trockner 32 ein Abluft-Wärmetauscher 46 zugeordnet, durch welchen die an der Trocknerluft-Ableitöffnung 34 abgegebene Trocknerluft hindurchgeleitet werden kann. Vermittels eines Gebläses 48 wird beispielsweise aus der Umgebung oder aus dem Fahrzeuginnenraum 30 abgezogene Luft durch den Abluft-Wärmetauscher 46 hindurchgeleitet und nimmt dabei Wärme von der die Trocknerkammer 14 verlassenden Trocknerluft auf. Die im Abluft-Wärmetauscher 46 erwärmte Luft kann somit als Heizluft in den Fahrzeuginnenraum 30 eingeleitet werden.

Auch der Abluft-Wärmetauscher 46 bzw. das diesem zugeordnete Gebläse 48 kann unter der Ansteuerung der beispielsweise als einzige Ansteuereinheit vorgesehenen Ansteuereinheit 40 stehen, so dass auch der Betrieb dieses Systembereichs abgestimmt auf den Betrieb des Trockners 32 bzw. des Fahrzeugheizgeräts 18 durchgeführt werden kann. Ist beispielsweise der Trockner 32 nicht im Betrieb, kann auch der Abluft-Wärmetauscher 46 bzw. dessen Gebläse 48 inaktiv geschaltet sein, da dann eine Erwärmung von Luft im Abluft-Wärmetauscher 46 grundsätzlich nicht möglich ist. Selbstverständlich könnte ein derartiger Abluft-Wärmetauscher 46 auch in ein Trocknersystem integriert sein, welches so wie das Trocknersystem 10 in Fig. 1 ausgebildet ist. In diesem Falle wäre es vorteilhaft, den Abluft-Wärmetauscher 46 bzw. dessen Gebläse 48 vermittels der dem Trockner 32 zugeordneten zweiten Ansteuereinheit 42 anzusteuern.

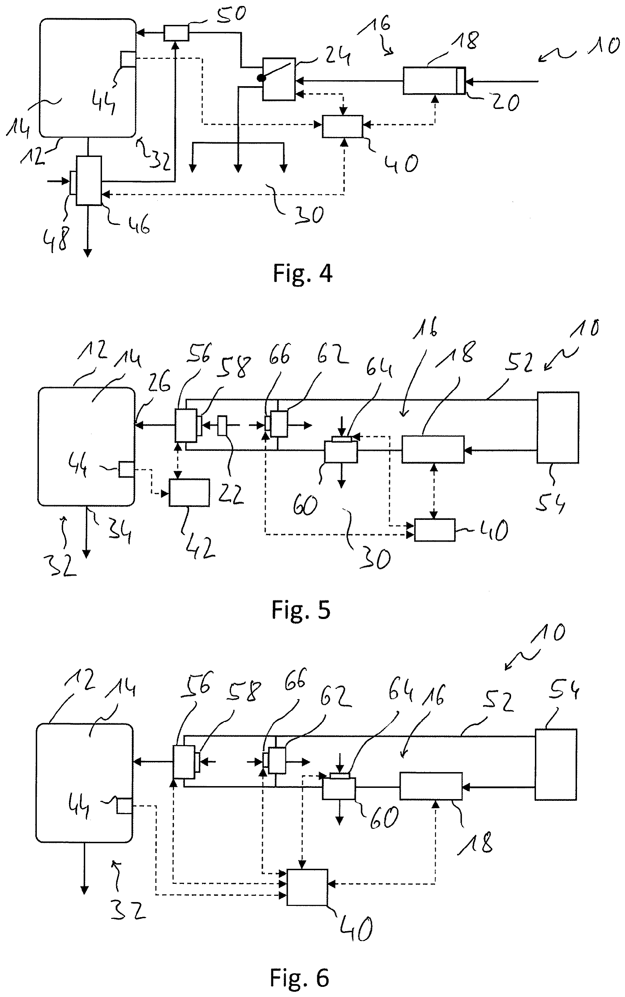

Bei dem in Fig. 4 dargestellten Trocknersystem 10 wird die im Abluft-Wärmetauscher 46 erwärmte Luft einem ersten Luftmischer 50 zugeführt. Im ersten Luftmischer 50 wird diese Luft mit der im Fahrzeugheizgerät 18 erwärmten und durch den Strömungsteiler 24 in Richtung zum Trockner 32 geleiteten Luft gemischt und zusammen mit dieser als Trocknerluft in die Trocknerkammer 14 eingeleitet. Um dabei die Effizienz des Trockners 32 weiter zu steigern, kann beispielsweise auch die den Abluft-Wärmetauscher 46 durchströmende Luft, entweder vor oder nach dem Durchströmen des Abluft-Wärmetauschers 46 durch einen Luftentfeuchter geleitet werden.

Die Fig. 5 zeigt ein Trocknersystem 12, bei welchem das Fahrzeugheizgerät 18 als so genanntes Wasserheizgerät ausgebildet ist und dazu dient, die in einem Kühlflüssigkeitskreislauf 52 einer Brennkraftmaschine 54 zirkulierende Kühlflüssigkeit, beispielsweise Kühlwasser, zu erwärmen. Das Fahrzeugheizgerät 18 kann bei dieser Ausgestaltung also auch dazu genutzt werden, die Brennkraftmaschine 54 vor Inbetriebnahme derselben thermisch zu konditionieren.

Die im Kühlflüssigkeitskreislauf 42, beispielsweise angetrieben durch eine nicht dargestellte Kühlflüssigkeitspumpe, zirkulierende Kühlflüssigkeit durchströmt einen Wärmetauscher 56 und überträgt dabei Wärme auf vermittels eines dem Wärmetauscher 56 zugeordneten Gebläses 58 der Umgebung eines Fahrzeugs oder ggf. dem Fahrzeuginnenraum entnommene Luft. Diese kann zuvor durch einen Luftentfeuchter 22 geleitet werden und wird nach Erwärmung im Wärmetauscher 56 als Trocknerluft in die Trocknerkammer 14 eingeleitet.

Zur Erwärmung des Fahrzeuginnenraums 30 können ein oder mehrere weitere Wärmetauscher 60, 62 mit diesen jeweils zugeordneten Gebläsen 64, 66 vorgesehen sein. Durch diese Wärmetauscher 60, 62, welche zueinander und zum Wärmetauscher 56 parallel oder/und seriell geschaltet sein können, kann Luft aus der Umgebung oder als Umluft aus dem Fahrzeuginnenraum 30 erwärmt und somit als Heizluft in den Fahrzeuginnenraum 30 eingeleitet werden. Die den beiden Wärmetauschern 60, 62 zugeordneten Gebläse 64, 66 stehen bei dieser Ausgestaltung unter der Ansteuerung der Ansteuereinheit 40, so dass die Menge der erwärmt in den Fahrzeuginnenraum 30 einzuleitenden Heizluft entsprechend dem Bedarf, beispielsweise auch gemäß der Vorgabe durch eine Bedienperson, eingestellt werden kann.

Es ist zu betonen, dass auch bei diesem Trocknersystem 10 die den Trockner 32 verlassende Trocknerluft, beispielsweise nachdem diese durch den in Fig. 1 dargestellten Luftentfeuchter 32 und Partikelfilter 38 hindurchgeleitet wurde, in den Fahrzeuginnenraum 30 als Heizluft eingeleitet werden kann.

Während bei dem in Fig. 5 dargestellten Trocknersystem 10 das Fahrzeugheizgerät 18 und der Trockner 32 bzw. der Wärmetauscher 56 und das diesem zugeordnete Gebläse 48 ansteuerungstechnisch voneinander entkoppelt sind, so dass vermittels der zweiten Ansteuereinheit 42 ansteuerungstechnisch unabhängig von der ersten Ansteuereinheit 40 die Menge der als Trocknerluft in die Trocknerkammer 14 erwärmt einzuleitenden Luft beispielsweise unter Berücksichtigung der vom der Sensoranordnung 44 bereitgestellten Information über den Betriebszustand der Trocknerkammer 14 eingestellt werden kann, sind bei dem in Fig. 6 dargestellten Trocknersystem 10 das Heizgerät 18 einerseits und der Trockner 32 bzw. der Wärmetauscher 56 und das Gebläse 58 ansteuerungstechnisch miteinander verknüpft. Selbstverständlich können auch die den Wärmetauschern 60, 62 zugeordneten Gebläse 64, 66 durch die bei dieser Ausgestaltung als einzige Ansteuereinheit vorgesehene erste Ansteuereinheit 40 angesteuert werden, um die Menge der in dem Fahrzeuginnenraum 30 einzuleitenden Heizluft entsprechend dem Bedarf einstellen zu können.

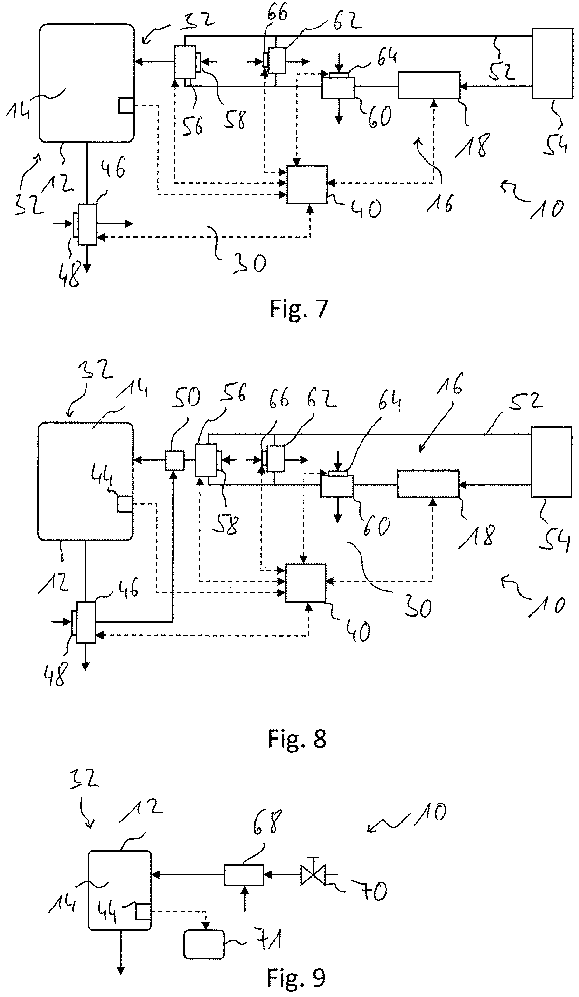

Die Fig. 7 zeigt die Kombination der in den Fig. 5 bzw. 6 dargestellten Trocknersysteme 10 mit dem in Fig. 4 dargestellten Abluft-Wärmetauscher 46. Die im Abluft-Wärmetauscher 46 Wärme von der die Trocknerkammer 14 verlassenden Trocknerluft aufnehmende Luft kann bei dieser Ausgestaltung als Heizluft in den Fahrzeuginnenraum 30 eingeleitet werden.

Bei der in Fig. 8 dargestellten Ausgestaltung wird die den Abluft-Wärmetauscher 48 verlassende, erwärmte Luft dem ersten Luftmischer 50 zugeführt, in welchem eine Durchmischung mit der den Wärmetauscher 56 erwärmt verlassenden Luft erfolgt und dieses Luftgemisch als Trocknerluft der Trocknerkammer 14 zugeführt wird.

Die Fig. 9 zeigt eine Weiterbildung des Trocknersystems 10, wie es beispielsweise vorangehend mit Bezug auf die Fig. 1 bis 8 beschrieben wurden. Bei diesem Trocknersystem 10 wird in einem zweiten Luftmischer 68 die vermittels der Fahrzeugheizeinheit 16 erwärmte Luft mit einem Luftstrom gemischt, der über ein in diesem Falle manuell einstellbares Ventil 70 zugeführt wird. Dieser Luftstrom kann beispielsweise als Frischluft der Umgebung eines Fahrzeugs oder als Umluft dem Fahrzeuginnenraum 30 entnommen werden. Beispielsweise kann vor oder nach dem Durchströmen des Ventils 70 dieser Luftstrom durch einen dem zweiten Luftmischer 68 vorgeschalteten Luftentfeuchter hindurchgeleitet werden. Das so erzeugte Gemisch aus vermittels der Fahrzeugheizeinheit 16 erwärmter Luft und beispielsweise der Umgebung entnommener Frischluft wird der Trocknerkammer 14 als Trocknerluft zugeführt.

Bei dieser Ausgestaltung des Trocknersystems 10 ist der zweite Luftmischer 68 als Saugpumpe ausgebildet, so dass vermittels des Stroms erwärmter Luft, welcher beispielsweise entweder durch das dem Fahrzeugheizgerät 18 zugeordnete Gebläse 20 oder das dem Wärmetauscher 56 zugeordnete Gebläse 58 gefördert wird, die das Ventil 70 durchströmende Luft angesaugt und somit in den Strom bereits erwärmter Luft eingeleitet wird.

Es ist in diesem Falle darauf hinzuweisen, dass bei Ausgestaltung des Fahrzeugheizgeräts 18 als Luftheizgerät dem zweiten Luftmischer 68 die den Strömungsteiler 24 verlassende oder diesem auch zugeführte erwärmte Luft zugeführt werden kann. Bei Ausgestaltung des Fahrzeugheizgeräts 18 als Wasserheizgerät kann dem zweiten Luftmischer 68 die im Wärmetauscher 56 erwärmte Luft zugeführt werden. Grundsätzlich könnte der zweite Luftmischer 68 auch in Verbindung mit dem ersten Luftmischer 50 eingesetzt und in Strömungsrichtung vor oder nach diesem angeordnet sein.

Da bei der in Fig. 9 dargestellten Ausgestaltungsform das Ventil 70 manuell einstellbar ist, kann beispielsweise vorgesehen sein, dass die von der Sensoranordnung 44 bereitgestellte Information beispielsweise hinsichtlich der Temperatur oder/und der Luftfeuchtigkeit in der Trocknerkammer 14 auf einer als Display ausgebildeten Anzeigeeinheit 71 angezeigt wird, so dass eine Bedienperson in die Lage versetzt wird, unter Berücksichtigung dieser Information durch Einwirkung auf das Ventil 70 das Mischungsverhältnis von vermittels der Fahrzeugheizeinheit 16 erwärmter Luft und Frischluft geeignet einzustellen.

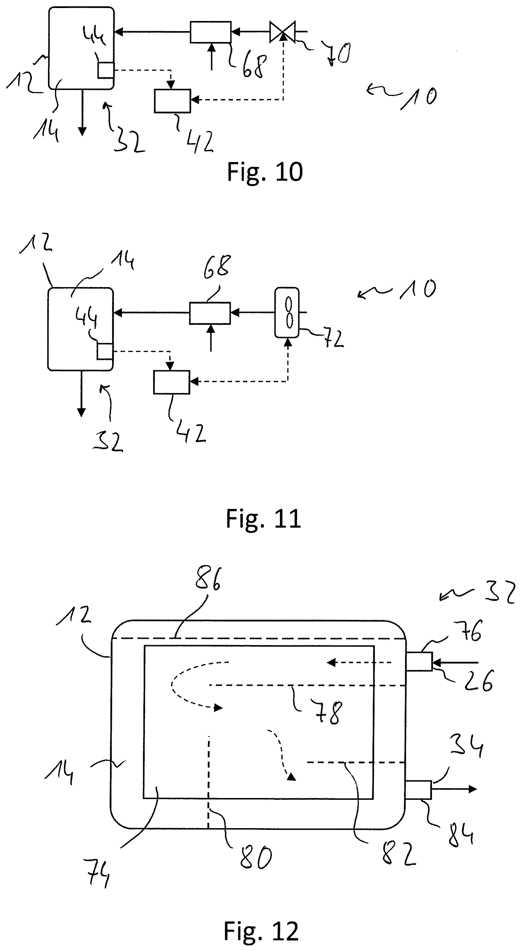

Bei der in Fig. 10 dargestellten Abwandlung des Trocknersystems 10 steht das Ventil 70 unter der Ansteuerung der dem Trockner 32 zugeordneten zweiten Ansteuereinheit 42, so dass die Menge der den Strom erwärmter Luft beizumengenden Luft, also beispielsweise Frischluft, automatisiert unter Berücksichtigung der von der Sensoranordnung 44 bereitgestellten Information über den Betriebszustand der Trocknerkammer 14 eingestellt werden kann. Grundsätzlich ist auch eine ansteuerungstechnische Verknüpfung mit der ersten Ansteuereinheit 40 möglich, insbesondere dann, wenn die erste Ansteuereinheit 40 als einzige Ansteuereinheit auch dazu dient, den Trockner 32 bzw. die diesem zugeordneten Systembereiche anzusteuern.

Bei der in Fig. 11 dargestellten Abwandlung des Trocknersystems 10 ist ein Gebläse 72 vorgesehen, welches die dem zweiten Luftmischer 68 zuzuführende Luft, z.B. Frischluft, beispielsweise unter entsprechender Ansteuerung vermittels der zweiten Ansteuereinheit 42 oder der ersten Ansteuereinheit 40 aktiv in den zweiten Luftmischer 68 einleitet. Dies ermöglicht ein größeres Spektrum im Mischungsverhältnis der vermittels des Fahrzeugheizgeräts 18 erwärmten Luft und der in den zweiten Luftmischer 68 einzuleitenden Frischluft oder dergleichen. Insbesondere ermöglicht dies auch einen derartigen Betrieb, bei welchem beispielsweise bei sehr trockener Umgebungsluft der Trocknerkammer 44 ausschließlich derartige Frischluft bzw. Umgebungsluft zugeführt wird und dem zweiten Luftmischer 68 keine vermittels des Fahrzeugheizgeräts 18 erwärmte Luft zugeführt wird.

Die Fig. 12 veranschaulicht in prinzipartiger Weise einen Trockner 32 mit einem im Wesentlichen starr, beispielsweise mit Kunststoffmaterial oder/und Metallmaterial aufgebautem Trocknergehäuse 12. An einer Seite des Trocknergehäuses 12 ist eine durch eine Klappe 74 abschließbare Öffnung vorgesehen, durch welche hindurch in der Trocknerkammer 14 zu trocknende Gegenstände eingebracht bzw. getrocknete Gegenstände entnommen werden können. An dem Trocknergehäuse 12 ist ein mit einer Trocknerluft-Zuführleitung zu koppelnder Einleitstutzen 76 vorgesehen, welcher die Trocknerluft-Einleitöffnung 26 bereitstellt, so dass die Trocknerluft in die Trocknerkammer 14 einströmen kann. Im Inneren der Trocknerkammer 14 sind mehrere Luftleitelemente 78, 80, 82 beispielsweise in ihrer Einbaulage variierbar vorgesehen, durch welche der Strom der Trocknerluft derart geleitet wird, dass im Wesentlichen das gesamte Volumen der Trocknerkammer 14 gleichmäßig durchströmt werden kann, bevor die Trocknerluft die Trocknerkammer 14 bzw. das Trocknergehäuse 12 über einen Ableitstutzen 84 verlässt, welcher die Trocknerluft-Ableitöffnung 34 bereitstellt.

Ferner können in der Trocknerkammer 14 verschiedene stangenartig oder netzartig ausgebildete Aufhängeorgane 86 angeordnet sein, an welchen die zu trocknenden Gegenstände derart aufgehängt werden können, dass sie von der in die Trocknerkammer 14 eingeleiteten Trocknerluft im Wesentlichen gleichmäßig umströmt werden.

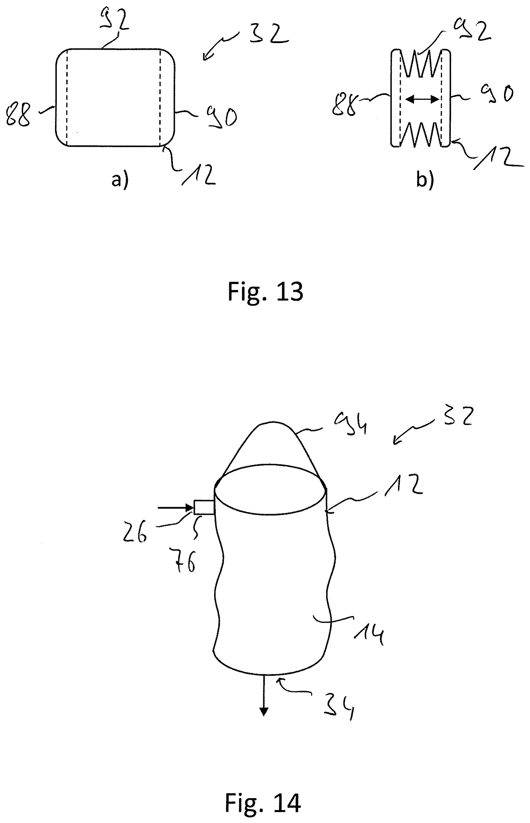

Die Fig. 13 zeigt eine Ausgestaltung des Trockners 32 mit teilweise starrem, teilweise flexiblem, also verformbaren Trocknergehäuse 12. Das Trocknergehäuse 12 umfasst zwei schalenartig und damit starr ausgebildete Gehäuseschalen 88, 90. Die Trocknerluft-Einleitöffnung 26 und die Trocknerluft-Ableitöffnung 34 können an einer oder verteilt auf beide Gehäuseschalen 88, 90 vorgesehen sein.

Zwischen den beiden Gehäuseschalen 88, 90 erstreckt sich ein flexibler, im dargestellten Ausgestaltungsbeispiel balgenartiger Gehäuseabschnitt 92. In dem in Fig. 13b) dargestellten Zustand ist das Trocknergehäuse 12 zusammengefaltet und nimmt somit insbesondere in einem Fahrzeuginnenraum 30 nur wenig Platz ein. Beispielsweise könnte ein derart aufgebautes Trocknergehäuse 12 an einer Seitenwand einer Küchenzeile oder einem sonstigen Wandbereich in einem Fahrzeuginnenraum 30 angebracht werden. In dem in Fig. 13a) dargestellten ausgedehnten Zustand ist das Trocknergehäuse 12 bzw. der Trockner 32 betriebsbereit und kann einerseits zu trocknende Gegenstände aufnehmen und andererseits mit trockener Luft gespeist werden.

In Zuordnung zu dem in Fig. 13 dargestellten Trocknergehäuse 12 können Arretierorgane vorgesehen sein, welche die beiden Gehäuseschalen 88, 90 bezüglich einander sowohl in dem in Fig. 13a) ausgedehnten Zustand, als auch in dem in Fig. 13b) dargestellten zusammengefalteten Zustand bezüglich einander arretieren.

Die Fig. 13 zeigt eine Ausgestaltung des Trocknergehäuses 12 als flexible, sackartige Hülle. An einem im oberen Bereich des Trocknergehäuses 12 vorgesehenen Aufhängeelement 94 kann im Betrieb des Trockners 32 das Trocknergehäuse 12 beispielsweise im Fahrzeuginnenraum 30 aufgehängt werden. An einen Einleitstutzen 76 kann eine Trocknerluft-Zuführleitung angeschlossen werden, um Trocknerluft in die Trocknerkammer 14 einleiten. Beispielsweise in einem unteren Bereich des flexiblen, hüllenartigen Trocknergehäuses 12 kann die Trocknerluft-Ableitöffnung 34 vorgesehen sein. Hierzu kann an einem Bodenbereich des grundsätzlich flexiblen Trocknergehäuses 12 ein Ableitstutzen 84 vorgesehen sein. Grundsätzlich könnte das Trocknergehäuse 12 bei dieser Ausgestaltung beispielsweise im unteren Bereich auch offen ausgebildet sein, so dass die Trocknerluft nach Durchströmen der Trocknerkammer 14 und Umströmen der darin angeordneten, zu trocknenden Gegenstände die Trocknerkammer 14 bzw. die Trocknerkammer 12 über den offenen unteren Bereich desselben verlässt.

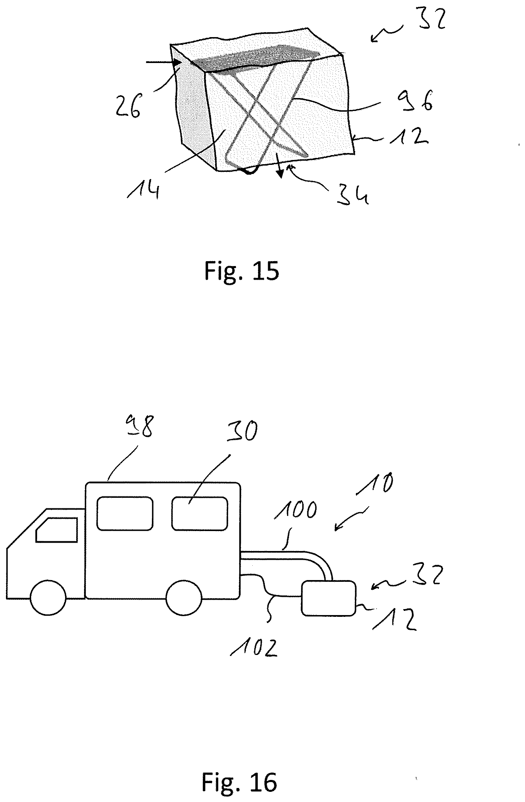

Eine Abwandlung eines derartigen flexiblen, hüllenartigen Trocknergehäuses 12 ist in Fig. 15 dargestellt. Man erkennt, dass dieses beispielsweise wieder an einer Unterseite offene, hüllenartige Trocknergehäuse 12 über einen Wäscheständer 96 gehängt ist, der einerseits dazu dient, dem Trocknergehäuse 12 bzw. auch der darin gebildeten Trocknerkammer 14 im Betrieb des Wäschetrockners 32 die gewünschte Form zu geben, andererseits aber auch genutzt werden kann, die zu trocknenden Gegenstände im Inneren des Trocknergehäuses 12 geeignet aufzuhängen.

Grundsätzlich könnte bei derartiger Ausgestaltung das Trocknergehäuse 12 auch im unteren Bereich abgeschlossen sein und zum Einleiten und Ableiten der trockenen Luft jeweilige Einleit- bzw. Ableitöffnungen bzw. Einleit- bzw. Ableitstutzen aufweisen. Um den Wäschetrockner 96 im Inneren des Trocknergehäuses 12 zu positionieren, kann dieser an einer Seite eine vergleichsweise große und zur Aufnahme des Wäschetrockners 96 ausgebildete Öffnung aufweisen, welche durch eine gleichermaßen flexible Abdeckung bzw. Klappe im Trocknerbetrieb abgeschlossen werden kann.

Die Fig. 16 veranschaulicht ein mit einem erfindungsgemäß aufgebauten Trocknersystem 10 kombiniertes und beispielsweise als Campingfahrzeug ausgebildetes Fahrzeug 98. Bei dem in Fig. 16 dargestellten Ausgestaltungsbeispiel ist der Trockner 32 so aufgebaut, dass dieser im Betrieb grundsätzlich außerhalb des Fahrzeugs 98 bzw. eines darin gebildeten Fahrzeuginnenraums 30 positioniert ist, so dass die der Trocknerkammer 14 zuzuführende Trocknerluft vermittels einer an das Trocknergehäuse 12 angeschlossenen Trocknerluft-Zuführleitung 100 in die Trocknerkammer 14 eingeleitet wird. Vermittels einer elektrischen Leitung 102 kann der Trockner 32 insbesondere bei ansteuerungstechnischer Verknüpfung beispielsweise mit dem Fahrzeugheizgerät 18 eines Fahrzeugs 98 angeschlossen werden. Bei ansteuerungstechnischer Entkopplung kann über die elektrische Leitung 102 der Trockner 32 bzw. eine diesem möglicherweise zugeordnete Ansteuereinheit oder die im Inneren des Trocknergehäuses 14 angeordnete Sensoranordnung mit elektrischer Energie versorgt werden.

Mit dem erfindungsgemäß aufgebauten Trocknersystem ist die Möglichkeit geschaffen, an einem Fahrzeug, wie z. B. Campingfahrzeug, Nutzfahrzeug, Wasserfahrzeug oder dergleichen, feuchte Gegenstände, wie z. B. gewaschene Kleidung, effizient zu trocknen. Der hierfür eingesetzte Trockner kann, je nach Ausgestaltung, fest in das Fahrzeug integriert sein, oder kann so gestaltet sein, dass dieser für den Trocknerbetrieb beispielsweise aus einem Stauraum entnommen wird und an geeigneter Stelle innerhalb oder außerhalb des Fahrzeugs positioniert wird. Die Unterbringung des Trockners entweder in einem betriebsbereiten Zustand oder in einem beispielsweise zusammengefalteten deaktivierten Zustand an einem Fahrzeug ist an beliebigen hierfür vorgesehenen bzw. geeigneten Positionen, beispielsweise im Fahrzeuginnenraum oder in einem Stauraum oder an einer Außenseite des Fahrzeugs realisierbar.

## Patentansprüche

1. Mobiles Trocknersystem für ein Fahrzeug, insbesondere Campingfahrzeug, Nutzfahrzeug oder dergleichen, umfassend:
- einen Trockner (32) mit einer in einem Trocknergehäuse (12) gebildeten Trocknerkammer (14), wobei an dem Trocknergehäuse (12) wenigstens eine Trocknerluft-Einleitöffnung (26) zum Einleiten von Trocknerluft in die Trocknerkammer (14) und wenigstens eine Trocknerluft-Ableitöffnung (34) zum Ableiten von Trocknerluft aus der Trocknerkammer (14) vorgesehen sind,
- eine Fahrzeugheizeinheit (16) zum Erwärmen von Luft,
wobei wenigstens ein Teil der von der Fahrzeugheizeinheit (16) erwärmten Luft der Trocknerkammer (14) als Trocknerluft zuführbar ist.

2. Trocknersystem nach Anspruch 1,
**dadurch gekennzeichnet, dass** die Fahrzeugheizeinheit (16) ein elektrisch betriebenes Fahrzeugheizgerät (18) oder/und ein brennstoffbetriebenes Fahrzeugheizgerät (18) umfasst.

3. Trocknersystem nach Anspruch 2,
**dadurch gekennzeichnet, dass** das Fahrzeugheizgerät (18) zur Erwärmung von Luft ausgebildet ist, und dass wenigstens ein Teil der von dem Fahrzeugheizgerät (18) erwärmten Luft der Trocknerkammer (14) als Trocknerluft zuführbar ist.

4. Trocknersystem nach Anspruch 3,
**dadurch gekennzeichnet, dass** wenigstens ein Teil der von dem Fahrzeugheizgerät (18) erwärmten Luft einem zu erwärmenden Fahrzeuginnenraum (30) als Heizluft zuführbar ist,
vorzugsweise wobei ein Strömungsteiler (24) vorgesehen ist, wobei der Strömungsteiler (24) dazu ausgebildet ist, wahlweise die oder einen Teil der von dem Fahrzeugheizgerät (18) erwärmten Luft der Trocknerkammer (14) als Trocknerluft zuzuführen oder die oder einen Teil der von dem Fahrzeugheizgerät (18) erwärmten Luft dem zu erwärmenden Fahrzeuginnenraum (30) als Heizluft zuzuführen.

5. Trocknersystem nach Anspruch 2,
**dadurch gekennzeichnet, dass** das Fahrzeugheizgerät (18) zur Erwärmung einer Flüssigkeit ausgebildet ist, und dass die Fahrzeugheizeinheit (16) wenigstens einen Wärmetauscher (56) zur Übertragung von Wärme von der Flüssigkeit auf der Trocknerkammer (14) als Trocknerluft zuzuführende Luft umfasst.

6. Trocknersystem nach Anspruch 5,
**dadurch gekennzeichnet,**
- **dass** die Fahrzeugheizeinheit (16) wenigstens einen Wärmetauscher (60, 62) zur Übertragung von Wärme von der Flüssigkeit auf einem zu erwärmenden Fahrzeuginnenraum (30) als Heizluft zuzuführende Luft umfasst,
oder/und
- **dass** die Flüssigkeit in einem Kühlmittelkreislauf (52) einer Brennkraftmaschine (54) enthaltene Kühlflüssigkeit ist.

7. Trocknersystem nach einem der Ansprüche 1-6,
**dadurch gekennzeichnet, dass** wenigstens ein Gebläse (20, 48, 58, 72) zum Fördern der Trocknerluft in die Trocknerkammer (14) vorgesehen ist.

8. Trocknersystem nach einem der Ansprüche 1-7,
**dadurch gekennzeichnet, dass** ein Abluft-Wärmetauscher (46) vorgesehen ist, wobei der Abluft-Wärmetauscher (46) dazu ausgebildet ist, Wärme von der aus der Trocknerkammer (14) abgeleiteten Trocknerluft auf der Trocknerkammer (14) als Trocknerluft zuzuführende Luft oder/und einem zu erwärmenden Fahrzeuginnenraum (30) als Heizluft zuzuführende Luft zu übertragen,
vorzugsweise wobei erster Luftmischer (50) vorgesehen ist, wobei der erste Luftmischer (50) dazu ausgebildet ist, vermittels des Abluft-Wärmetauschers (46) erwärmte Luft und vermittels der Fahrzeugheizeinheit (16) erwärmte Luft zu mischen und der Trocknerkammer (14) als Trocknerluft zuzuführen.

9. Trocknersystem nach einem der Ansprüche 1-8,
**dadurch gekennzeichnet, dass** ein zweiter Luftmischer (68) vorgesehen ist, wobei der zweite Luftmischer (68) dazu ausgebildet ist, vermittels der Fahrzeugheizeinheit (16) erwärmte Luft mit im Wesentlichen nicht erwärmter Luft zu mischen und der Trocknerkammer (14) als Trocknerluft zuzuführen,
vorzugsweise wobei der zweite Luftmischer (68) als Saugpumpe ausgebildet ist zum Ansaugen der im Wesentlichen nicht erwärmten Luft vermittels der vermittels der Fahrzeugheizeinheit (16) erwärmten Luft, oder/und ein Gebläse (72) zum Fördern der im Wesentlichen nicht erwärmten Luft in den zweiten Luftmischer (68) vorgesehen ist.

10. Trocknersystem nach einem der Ansprüche 1-9,
**dadurch gekennzeichnet,**
- **dass** ein erster Luftentfeuchter (22) zum Entfeuchten wenigstens eines Teils der der Trocknerkammer (14) als Trocknerluft zuzuführenden Luft vorgesehen ist, oder/und dass ein zweiter Luftentfeuchter (36) zum Entfeuchten wenigstens eines Teils der aus der Trocknerkammer (14) abgeleiteten Trocknerluft vorgesehen ist, oder/und dass ein Partikelfilter (38) zum Ausfiltern von in der aus der Trocknerkammer (14) abgeleiteten Trocknerluft enthaltenen Partikeln vorgesehen ist,
oder/und
- **dass** eine Menge oder/und eine Temperatur der der Trocknerkammer (14) zuzuführenden Trocknerluft in Abhängigkeit von wenigstens einem Betriebsparameter der Trocknerkammer (14), vorzugsweise einer Temperatur oder/und einer Luftfeuchtigkeit in der Trocknerkammer (14), einstellbar ist.

11. Trocknersystem nach Anspruch 2 oder einem der Ansprüche 3-10, sofern auf Anspruch 2 rückbezogen,
**dadurch gekennzeichnet, dass** eine erste Ansteuereinheit (40) zum Ansteuern der Fahrzeugheizeinheit (16) vorgesehen ist.

12. Trocknersystem nach einem der Ansprüche 1-11,
**dadurch gekennzeichnet, dass** eine zweite Ansteuereinheit (42) zum Ansteuern wenigstens eines Systembereichs zum Einstellen der Menge oder/und der Temperatur der der Trocknerkammer (14) zuzuführenden Trocknerluft vorgesehen ist.

13. Trocknersystem nach Anspruch 11 und Anspruch 12,
**dadurch gekennzeichnet, dass** die erste Ansteuereinheit (40) die zweite Ansteuereinheit (42) bereitstellt, oder dass die erste Ansteuereinheit (40) und die zweite Ansteuereinheit (42) als separate Ansteuereinheiten ausgebildet sind.

14. Trocknersystem nach einem der Ansprüche 1-13,
**dadurch gekennzeichnet,**
- **dass** eine Anzeigeeinheit (71) zum Anzeigen wenigstens eines Betriebsparameters der Trocknerkammer (12), vorzugsweise einer Temperatur oder/und einer Luftfeuchtigkeit in der Trocknerkammer (14), vorgesehen ist,
oder/und
- **dass** das Trocknergehäuse (12) wenigstens teilweise als im Wesentlichen starres Trocknergehäuse (12) ausgebildet ist, oder/ und das Trocknergehäuse (12) wenigstens teilweise als flexibles Trocknergehäuse (12), vorzugsweise balgenartig oder hüllenartig, ausgebildet ist.

15. Fahrzeug, insbesondere Campingfahrzeug, Nutzfahrzeug oder dergleichen, umfassend ein Trocknersystem (10) nach einem der Ansprüche 1-14, vorzugsweise wobei das Trocknergehäuse (12) in einen Fahrzeuginnenraum (30) des Fahrzeugs (98) fest installiert ist oder das Trocknergehäuse (12) außerhalb des Fahrzeuginnenraums (30) positioniert oder positionierbar ist, wobei die Trocknerluft-Einleitöffnung (24) vermittels einer Trocknerluft-Zuführleitung (100) mit dem Fahrzeug (98) verbunden oder verbindbar ist.
